# EUROPÄISCHE PATENTSCHRIFT

(11) **EP 0 555 707 B1**
(45) Veröffentlichungstag und Bekanntmachung des Hinweises auf die Patenterteilung: **10.01.1996**
(21) Anmeldenummer: 93101453.4
(22) Anmeldetag: 29.01.1993
(51) Int. Cl.: F16F 7/08, D06F 37/20

(54) **Reibungsdämpfer**
Friction damper
Amortisseur à friction

(30) Priorität: 31.01.1992 DE 4202721
(43) Veröffentlichungstag der Anmeldung: 18.08.1993
(73) Patentinhaber: SCHWARZWÄLDER UHRWERKE-FABRIK BURGER GmbH & CO. KG, D-78136 Schonach (DE)
(72) Erfinder: Aippersbach, Peter, W-7741 Schönwald (DE); Beier, Christian, W-4830 Gütersloh (DE); Herden, Rudolf, W-4836 Herzebrock-Clarholz (DE); Brinkmann, Martin, W-4835 Rietberg 2 (DE)
(74) Vertreter: Neisen, Jürgen, Dipl.-Ing.

(56) Entgegenhaltungen:
- EP-A- 0 445 428
- DE-A- 3 016 915
- DE-A- 3 920 752
- US-A- 3 796 288

## Beschreibung

Die Erfindung betrifft einen Reibungsdämpfer nach dem Oberbegriff des Anspruchs 1.

Zur Dämpfung von mechanischen Schwingungen werden bisher vorwiegend ölhydraulische Dämpfer verwendet. Aus Umweltschutzgründen muß beim Verschrotten solcher Dämpfer das Hydrauliköl speziell entsorgt werden. Um eine bessere Recyclingfähigkeit der Dämpfer zu erreichen, sind anstelle der ölhydraulischen Schwingungsdämpfer auch schon rein mechanisch arbeitende Reibungsdämpfer eingesetzt worden. Bei diesen Dämpfern wird durch eine konstante und geschwindigkeitsunabhängige Reibkraft die Schwingungsenergie in Reibungswärme umgesetzt. Solche Dämpfer haben jedoch den Nachteil, daß die geschwindigkeitsunabhängige Reibungsdämpfung auch schon bei kleinen Schwingungen Geräusche sowie einen Reibverschleiß verursacht.

Aus der EP-0 445 428 A1 ist ein Reibungsdämpfer bekannt, bei dem die Reibungskraft durch einen integrierten elektrischen Verstellantrieb in Form eines Dehnstoffelementes einstellbar ist. Ein solches Dehnstoffelent bewirkt bei Stromzufuhr durch sein erwärmungsbedingtes Zusammenziehen ein Nachlassen der Reibungskraft. Beim Ausschalten des Stroms erfolgt eine Ausdehnung und eine damit verbundene Zunahme der Reibungskraft. Dies erfolgt jedoch mit einer großen Trägheit, die bei einem unvorhergesehenen Zwischenfall, beispielsweise bei einem Stromausfall zu Nachteilen führt. Ereignet sich der Stromausfall beispielsweise, wenn die Trommel einer Waschmaschine mit überkritischer Drehzahl angetrieben wird, so fällt die Drehzahl ab und es wird anschließend der kritische Drehzahlbereich durchfahren, in dem die Trommel großen Auslenkungen unterworfen ist und deshalb stark gedämpft werden muß. Hier kann der aus der EP-0 445 428 A1 bekannte Reibungsdämpfer nicht schnell genug reagieren.

Der Erfindung liegt deshalb die Aufgabe zugrunde, bei dem in Rede stehenden Reibungsdämpfer bei Stromausfall oder bei Ausfall des eingebauten Antriebs ungedämpfte Schwingungen und damit eine Unfallgefahr zu vermeiden.

Diese Aufgabe wird bei einem Reibungsdämpfer der gattungsbildenden Art erfindungsgemäß mit den kennzeichnenden Merkmalen des Anspruches 1 gelöst.

Infolge der erfindungsgemäßen Ausbildung kann die Reibungskraft des Dämpfers über den elektrischen Verstellantrieb an die jeweiligen auftretenden Schwingungen angepaßt werden. Dadurch ist es auf einfache Weise möglich, beispielsweise mit kleinen Schwingungen auch die Reibungskraft zu verringern, so daß kein übermäßiger Verschleiß und keine störenden Nebengeräusche auftreten. Wenn der Reibungsdämpfer beispielsweise für Waschmaschinen eingesetzt wird, um beim An - und Auslaufen der Waschmaschinentrommel durch Unwucht auftretende Schwingungen zu dämpfen, kann über den Verstellantrieb die Dämpfung sogar aufgehoben werden, wenn die volle Schleuderdrehzahl erreicht ist und keine Dämpfung mehr erforderlich ist. Dadurch hat der erfindungsgemäße Reibungsdämpfer eine hohe Lebensdauer. Mit dem erfindungsgemäßen Reibungsdämpfer ist es aber auch möglich, beispielsweise bei Stromausfall oder bei Ausfall des eingebauten Antriebs ungedämpfte Schwingungen und damit eine Unfallgefahr zu vermeiden. In diesem Fall kann die auftretenden Schwingungsenergie dazu benutzt werden, einen Auslöser derart zu bewegen, daß auch auf mechanischem Weg der Bremskörper in Dämpfungsstellung bewegt wird.

Weitere Merkmale der Erfindung ergeben sich aus den weiteren Ansprüchen, der Beschreibung und der Zeichnung.

Die Erfindung wird nachstehend anhand zweier in den Zeichnungen dargestellter Ausführungsbeispiele näher beschrieben. Es zeigt:
- Figur 1: im Längsschnitt einen erfindungsgemäßen Reibungsdämpfer
- Figur 2: eine zweite Ausführungsform eines erfindungsgemäßen Reibungsdämpfers in einer Darstellung entsprechend Figur 1.

Die in den Zeichnungen dargestellten Reibungsdämpfer dienen zur Dämpfung der beim Schleudervorgang einer Trommel einer Waschmaschine auftretenden Schwingungen und werden zusammen mit weiteren gleichen Reibungsdämpfern im Maschinengehäuse eingebaut.

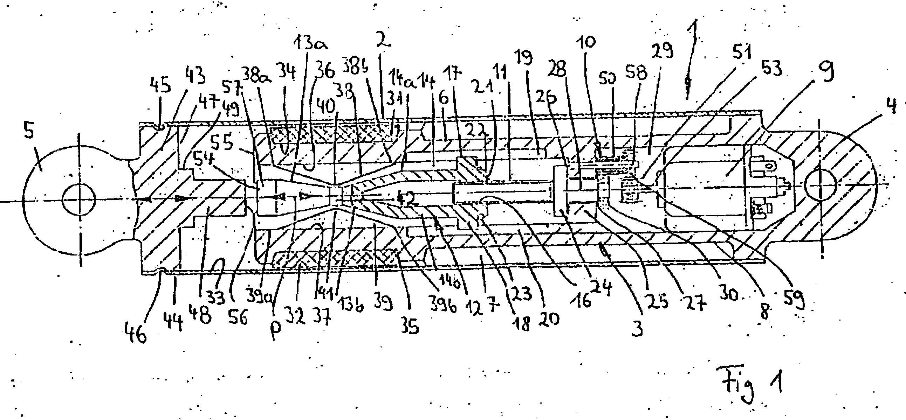

Der Reibungsdämpfer (1) nach Figur 1 hat ein vorzugweise zylindrisches Gehäuse (2), in dem ein Bremskörper (3) mit einem ortsfesten Auge (4) und einem beweglichen Auge (5) angeordnet ist.

Der Bremskörper (3) ist über einen Teil seiner Länge rohrförmig ausgebildet und an seinem dem beweglichen Auge (5) zugewandten Ende unter Bildung zweier Bremsbacken (6) und (7) geschlitzt. Der dem festen Auge (4) zugewandte endseitige Rohrabschnitt (8) des Bremskörpers (3) weist das einstückig mit ihm ausgebildete Auge (4) auf, das am Waschmaschinengehäuse befestigt wird. Im Rohrabschnitt (8) ist ein relativ kleiner Elektromotor (9) mit einem Untersetzungsgetriebe (10) untergebracht, das eine Spindel (11) drehbar antreibt. Auf der Spindel (11) sitzt eine Spindelmutter (12), die teilweise als Doppelkegel mit zwei Kegelabschnitten (13a) und (13b) ausgebildet ist. Vorzugsweise ist ihr von der Spindel (11) abgewandter Teil, vorzugsweise die eine Hälfte, doppelkegelförmig ausgebildet, während die andere Hälfte (14) im wesentlichen zylindrisch ausgebildet ist. Die Spindelmutter (12) kann aber auch anders ausgebildet sein. Sie kann beispielsweise nur den einen Kegelabschnitt (13a) aufweisen. Der andere Kegelabschnitt (13b), der ein Übergangsteil in den Spindelmutterteil (14) bildet, kann auch beliebig anders ausgebildet sein oder entfallen. Der Teil (14) ist zum Aufweiten geschlitzt ausgebildet, wodurch zwei im Querschnitt etwa halbkreisförmige Federschenkel (14a und 14b) gebildet werden. Der Teil (14) kann aber auch mehrach geschlitzt sein, so daß mehrere Federschenkel gebildet werden. Durch die geschlitzte Ausbildung der Spindelmutter (12) kann sie bei Bedarf, wie noch erläutert wir, mit ihrem Innengewinde (16) über das Gewinde der Spindel (11) ratschen, wenn die Spindelmutter (12) bei Unwucht mechanischen Schlägen ausgesetzt wird. Der Spindelmutterteil (14) hat an seinem einen Ende (15) eine zentrale Gewindebohrung (16), in die die Gewindespindel (11) geschraubt wird. Über das Ende (15) ragen zwei diametral einander gegenüberliegende Radialnocken (17) und (18), die zur Verdrehsicherung der Spindelmutter (12) jeweils in eine Längsnut (19) und (20)der Brernsbacken (6) und (7)ragen, Auf dem axial über die Nocken (16) und (17) ragenden Abschnitt (21) des Endes (15) ist in Ringnuten (22) der Federteile (14a, 14b) ein Federringring (23) angeordnet, mit dem die Federschenkel (14a) und (14b) bzw. das Innengewinde (16) der Spindelmutter (12) in Eingriff mit dem Außengewinde der Spindel (11) gehalten werden. Die Spindel (11) liegt mit einem Ringbund (24) an einem Zwischenboden (25) bzw. einem Ringflansch (26) einer Hülse (27) an, die in eine axialen Durchgangsöffnung des Zwischenbodens liegt. Über den Ringbund (24) ragt ein Spindelende (28), das in der Hülse (27) gelagert und in der den Motor (9) aufnehmenden Rohröffnung (29) mit einem Zahnrad (30) gesichert ist. Es kämmt mit einem Zahnrad (50), das drehfest auf einer Zwischenwelle (58) sitzt, die parallel zur Spindel (11) liegt und im Zwischenboden (25) des Bremskörpers (3) gelagert ist. Auf der Zwischenwelle (58) sitzt ein weiteres Zahnrad (59), das vorzugsweise einstückig mit dem Zahnrad (50) ausgebildet und in Eingriff mit einem auf der Motorwelle (53) sitzenden Zahnrad (51) ist. Das Getriebe kann entsprechend den jeweiligen Anforderungen beispielsweise als zwei- oder mehrstufiges Getriebe ausgebildet sein.

Die Bremsbacken (6) und (7) tragen an sich bekannte Reibbeläge (31) und (32), mit denen sie in Dämpfungsstellung des Reibungsdämpfers (1) an die Innenwand (33) des Gehäuses (2) angepreßt sind. Die Reibbeläge liegen in Nuten (34) und (35) in der Außenseite der Bremsbacken (6) und (7). An den einander zugewandten Innenseiten (36, 37) der Bremsbacken (6, 7) liegen V-förmig gebogene Blattfedern (38) und (39) mit den freien Enden ihrer Schenkel (38a, 38b und 39a, 39b) an. Die einander zugewandten Biegestellen (40) und (41 ) der Federn (38) und (39) liegen in ungedämpfter Ausgangsstellung des Reibungsdämpfers (1) in Höhe einer im Querschnitt vorzugsweise quadratischen Übergangsstelle bzw. Verengung (42) des Doppelkegels (13a, 13b) der Spindelmutter (12).

Zum Dämpfen der Schwingungen An- und Auslaufen der Trommel während des Schleudervorganges der Waschmaschine wird die Spindel (11) des Motors (9) so gedreht, daß die in Eingriff mit ihr befindliche Spindelmutter (12) in Richtung des Doppelpfeiles P in der Zeichnung nach rechts verschoben wird. Dabei trifft sie mit ihrem Kegelabschnitt (13a) bzw. dessen Kegelmantelfäche auf die Biegestellen (40 und 41) der Blattfedam (38) und (39). Diese werden dadurch federnd aufgespreizt, wodurch die Bremsbacken (6) und (7) nach außen gedrückt werden. Sie werden dabei mit ihren Reibbelägen (31) und (32) gegen die Gehäuseinnenwand (33) gepreßt. Auf diese Weise werden Schwingungen, die von der Waschmaschinentrommel über das Auge (5) auf das Gehäuse (2) übertragen werden, einwandfrei gedämpft.

Das an der Waschmaschinentrommel befestigte Auge (5) ist einstückig mit einer Ringscheibe (43) ausgebildet, mit der es am einen Ende (44) des Gehäuses (2) befestigt ist. Zur Axialsicherung des Auges (5) weist die Ringscheibe (43) eine umlaufende Nut (45) auf, in die das Gehäuseende (44) mit einer entsprechenden Ringwulst (46) formschlüssig eingepreßt ist. Auf der vom Auge (5) abgewandten Seite ragt mittig über die eine Stirnseite (47) der Ringscheibe (43) ein Ansatz (48), der über eine Schulter (49) an die Ringscheibe (43) anschließt.

Der Durchmesser des axialen Ansatzes (48) ist etwa gleich dem Durchmesser des einen zylindrischen Endstückes (57) des Kegelteiles (13a) und kleiner als die lichte Weite des freien Endes (55) des Bremskörpers (3).

Mit dem beschriebenen Reibungsdämpfer (1) können zu Beginn des Schleudervorganges und zu Beginn des Auslaufvorganges der Trommel auftretende und durch Massenunwuchten hervorgerufene Schwingungen einwandfrei gedämpft werden. Hierzu wird der Motor (9) über eine (nicht dargestellte) Programmsteuerautomatik der Waschmaschine bei Beginn des Schleudervorgangs für ca. 1 bis 2 Sekunden zum Beispiel rechtsdrehend eingeschaltet. Dabei wird über das Untersetzungsgetriebe (10) die Spindel (11) gedreht. Über die Spindel wird die Spindelmutter (12) in Richtung des Pfeiles P in der Zeichnung nach rechts verschoben. Dabei trifft der eine Kegelteil (13a) des stößelartigen Doppelkegels mit seiner Kegelmantelfläche auf die Biegestelle (40) und (41) der Federn (38 und 39), wodurch sie mehr oder weniger stark nach außen gedrückt werden. Unter der Kraft der Blattfedern (38) und (39) werden die Bremsbacken (6) und (7) radial nach außen gedrückt, deren Reibbeläge (31 und 32) am Gehäuse (2) mit einer bestimmten Anpreßkraft anliegen. Dadurch wird die erforderliche Dämpfung der auftretenden Schwingungen erreicht. Nech dieser Anlauf- und Auslaufphase kann der Dämpfer wieder abgeschaltet werden, da dann die Schwingungen der Trommel wesentlich geringer sind. Hierbei können ein unnötiger Verschleiß des Reibungsdämpfers und eventuell während der Dämpfung auftretende Geräusche einwandfrei vermieden werden. Hierzu wird der Motor am Ende des Hochlauf- und am Ende des Auslaufvorganges für ca. 1 bis 2 Sekunden linksdrehend wieder eingeschaltet, so daß die Spindelmutter (12) wieder in ihre in der Zeichnung dargestellte Ausgangslage zurückbewegt wird. Die beiden Blattfedern (38, 39) können sich entspannen, wodurch die Bremsbacken (6) und (7) wieder radial zurückfedern und die Reibbeläge (31, 32) von der Innenwand des Gehäuses (2) abheben.

Bei voller Schleuderdrehzahl wird, wie erwähnt, die Reibungsdämpfung abgeschaltet. Sollte der Strom ausfallen, würde die Trommel ungedämpft auslaufen, da die Reibungsdämpfung dann nicht mehr eingeschaltet werden könnte. Um in diesem Fall dennoch eine Reibungsdämpfung zu erreichen, wird die dabei auftretende Unwuchtenergie dazu benutzt, die als Bremsstößel wirkende Spindelmutter (12) mechanisch in Bremsstellung zu stoßen. Durch die auftretende hohe Unwuchtenergie gerät das eine, mit der Trommel gekuppelte Auge (5) des Reibungsdämpfers (1) mit dem Ansatz (48) in Schwingung. Bei Überschreiten eines maximal zulässigen Hubes trifft der Anschlag bzw. Stempel (48) mit seiner Stirnseite (54) auf die Stirnfläche (56) der Spindelmutter (12) bzw. ihres Endstückes (57). Dabei wird die Spindelmutter aus ihrer dargestellten Ausgangslage in eine rechts verschobene Bremsstellung gehämmmert, in der der Kegelabschnitt (13a) die Federn (38, 39) radial nach außen spannt und die Bremsbacken (6) und (7) mit ihren Reibbelägen (31, 32) gegen das Gehäuse (2) drückt. Beim Aufschlagen des Anschlages auf den Kegelabschnitt (13a) werden unter der dabei wirkenden Kraft die Federschenkel (14a) und (14b) des Spindelmutterteiles (14) aufgespreizt, so daß die Spindelmutter (12) mit ihrem Gewinde (16) vom Gewinde der Spindel (11) freikommt und auf der Spindel ratschend verschoben wird, ohne daß dabei die Gewindegänge beschädigt werden. Dabei wird die Spindelmutter (12) in der Zeichnung nach rechts verschoben, wobei der Kegelabschnitt (13a) auf die Feder (38) und (39) drückt und sie unter gleichzeitigem Aufspreizen der Bremsbacken (6) und (7) spannt. Sobald die Störung behoben ist und elektrische Spannung wieder anliegt, können z. B. durch linksdrehendes Einschalten des Motors (9) die Bremsbacken (6, 7) motorisch in ihre ungedämpfte, vom Gehäuse (2) abgehobene Lage zurückfedern.

Sollte der Antrieb des ein- und ausschaltbaren Reibungsdämpfers bei Stromausfall versagen, so kann die Dämpfung in der beschriebenen Weise beim Entstehen der ersten Unwucht mechanisch eingeschaltet werden und in dieser Stellung, wie bei den bekannten Reibungsdämpfern, stehenbleiben. Dieser Vorgang wird wiederum dadurch ausgelöst, daß durch die auftretende relativ hohe Unwucht das Auge (5) mit dem Gehäuse (2) in Schwingungen versetzt wird, wobei bei Überschreiten eines bestimmten Hubes der Stempel bzw. Anschlag (48) auf die Spindelmutter (12) trifft und diese duch aufspreizen ihrer Federschenkel (14a und 14b) so außer Eingriff mit der Spindel (11) bringt, daß sie auf der Spindel verschoben werden kann. Die Bremsbacken (6) und (7) werden dadurch radial nach außen gedrückt, wobei ihre Reibbeläge (31, 32) am Gehäuse (2) dämpfend anliegen.

Vorzugweise besteht der Bremskörper (3) mit der Spindel (11) ) und der Spindelmutter (12) aus Kunststoff, während das Gehäuse (2) vorteilhaft aus Metall besteht.

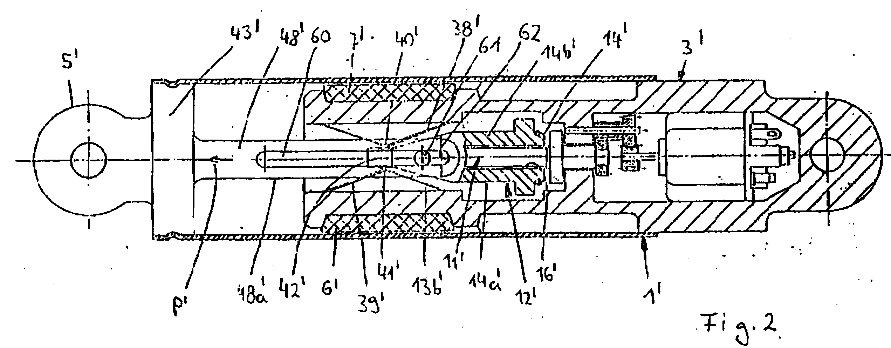

Der Reibungsdämpfer nach Figur 2 unterscheidet sich im wesentlichen dadurch von dem zuvor beschriebenen Reibungsdämpfer, daß seine Spindelmutter (12') durch Zugbeanspruchung anstatt durch Druckbeanspruchung in Dämpfungsstellung verstellbar ist.

Die Spindelmutter (12') ist wie die Spindelmutter (12) gemäß Figur 1 als Hohlkörper ausgebildet, in den die Spindel (11') ragt. Sie ist im wesentlichen gleich ausgebildet wie die Spindel (11) gemäß Figur 1. Die Spindelmutter (12') hat im Unterschied zur Spindelmutter (12) nur einen, dem Kegelabschnitt (13b) entsprechenden Kegelabschnitt (13b'), der in ein der Verengung (42) entsprechendes verjüngtes und im Querschnitt vorzugsweise quadratisches Ende (42') übergeht.

In ungedämpfter Stellung liegen die Biegestellen (40'; 41') der Federn (38', 39') des Reibungsdämpfers (1') jeweils benachbart zu einer der einander gegenüberliegenden Außenseiten des Endes (42').

An Stelle des Ansatzes (48) des Reibungsdämpfers (1) weist das Auge (5') gemäß Figur 2 bzw. die mit ihm einteilig ausgebildete Ringscheibe (43') mindestens eine, im Ausführungsbeispiel zwei mit Abstand parallel zueinander verlaufende Zugstege (48a') auf. in Figur 2 ist nur der eine Zugsteg dargestellt. Die Zugstege sind dadurch gebildet, daß an die Ringscheibe (43') ein im Vergleich zum Ansatz (48) gemäß Figur 1 längerer Ansatz (48') anschließt, der über einen relativ langen Abschnitt in der Länge geschlitzt ausgebildet ist und in den Bremskörper (3') ragt. Wie Figur 2 weiter zeigt, weisen die Zugstege (48a') jeweils deckungsgleich zueinanderliegende Längsschlitze auf, von denen wiederum nur der eine Längsschlitz (60) in Figur 2 sichtbar ist. In die Längsschlitze (60) ragen jeweils ein Zapfen bzw. Nocken (61) der Spindelmutter (12'). Die Nocken (61) sind am Kegelabschnitt (13b') der Spindelmutter (12') vorgesehen; sie ragen radial und diametral einandergegenüberliegend über den Kegelabschnitt.

Bei diesem Reibungsdämpfer (1') wird die Dämpfung beispielsweise bei Stromausfall dadurch mechanisch eingeschaltet, daß bei der auftretenden relativ hohen Unwucht das Auge (5') des Reibungsdämpfers (1') mit den Zugstegen (48a') in Schwingungen gerät. Wenn hierbei ein maximal zulässiger Hub überschritten ist, trifft der Zugsteg (48a') mit seinem in Zugrichtung P' rückwärtigen Schlilzende (62) auf die Nocken (61) der Spindelmutter (12'). Dabei wird die Spindelmutter (12') aus ihrer dargestellten Ausgangslage in eine Dämpfungsstellung nach links in Figur 2 gezogen. Hierbei werden - wie anhand von Figur 1 beschrieben - die Federschenkel (14a' und 14b') des zylindrischen Spindelmutterteils (14') aufgespreizt, so daß die Spindelmutter (12') mit ihrem Gewinde (16') vom Gewinde der Spindel (11') freikommt, in dem die Federschenkel über das Spindelgewinde ratschen. Dabei wird die Spindelmutter (12') nach links verschoben, wobei ihr Kegelabschnitt (13b') auf die Federn (38') und (39') trifft und sie aufspreizt. Dadurch werden die Bremsbacken (6') und (7') des Reibungsdämpfers (1') radial nach außen gegen die Wand des Gehäuses (2') in Dämpfungsstellung bewegt. Im übrigen ist die Ausbildung des Reibungsdämpfers (1') und dessen Funktionsweise gleich wie bei dem Reibungsdärnpfer (1) nach Figur 1.

## Patentansprüche

1. Reibungsdämpfer für Maschinen, insbesondere Waschmaschinen, mit mindestens einem Bremskörper, der mindestens in Dämpfungsstellung an einem Gehäuse unter Federkraft anliegt, wobei die Reibungskraft, mit der der Bremskörper (3; 3') am Gehäuse (2; 2') anliegt, durch einen integrierten elektrischen Verstellantrieb (9, 10, 11, 12; 11', 12') in ihrer Größe verstellbar ist,
dadurch gekennzeichnet,
daß der Bremskörper (3; 3') bei Stromausfall und/ oder einem Ausfall des Antriebs über die zu dämpfende Schwingungsenergie auf mechanischem Wege in Dämpfungsstellung bringbar ist.

2. Reibungsdämpfer nach Anspruch 1,
dadurch gekennzeichnet,
daß die Reibungskraft durch feste zeitliche Ansteuerung eines Motors (9) des Verstellantriebes (9 bis 12; 11', 12') während des Betriebes der Maschine ein- und ausschaltbar ist.

3. Reibungsdämpfer nach einem der Ansprüche 1 oder 2,
dadurch gekennzeichnet,
daß der Verstellantrieb (9 bis 12; 11', 12') den Motor (9), ein mit diesem verbundenes Untersetzungsgetriebe (10), eine Stellspindel (11; 11') sowie eine Spindelmutter (12; 12') aufweist.

4. Reibungsdämpfer nach Anspruch 3,
dadurch gekennzeichnet,
daß die Spindelmutter (12) mindestens ein als Kegelabschnitt (13a; 13b) ausgebildetes Stellteil zur Verstellung des Bremskörpers (3;3') in die Dämpfungsstellung aufweist.

5. Reibungsdämpfer nach einem der Ansprüche 1 bis 4,
dadurch gekennzeichnet,
daß der Bremskörper (3; 3') durch Druck- und/oder Zugbeanspruchung der Spindelmutter
(12; 12') in Dämpfungsstellung bringbar ist.

6. Reibungsdämpfer nach einem der Ansprüche 1 bis 5,
dadurch gekennzeichnet,
daß der Bremskörper (3; 3') mindestens zwei radial aufweitbare Bremsbacken (6, 7; 6', 7') hat, die umfangsseitige Reibbeläge (31, 32) tragen, mit denen sie in Dämpfungsstellung am Gehäuse (2; 2') anliegen.

7. Reibungsdämpfer nach einem der Ansprüche 3 bis 6,
dadurch gekennzeichnet,
daß die Spindelmutter (12; 12') in Dämpfungsstellung mindestens mit ihrem einen Kegelanteil (13a; 13b) an mindestens einer, vorzugsweise zwei, diametral einander gegenüberliegenden und den Bremsbacken (6, 7; 6', 7') zugeordneten Federn (38, 39; 38', 39') anliegt.

8. Reibungsdämpfer nach einem der Ansprüche 1 bis 7,
dadurch gekennzeichnet,
daß die Federn (38, 39; 38', 39') als V-förmig gebogene Federn ausgebildet sind, deren Biegestellen (40, 41; 40', 41') in ungedämpfter Stellung des Dämpfers (1; 1') in Höhe einer Verengung (42; 42') der Spindelmutter (12; 12') liegen.

9. Reibungsdämpfer nach einem der Ansprüche 3 bis 8,
dadurch gekennzeichnet,
daß die Spindel (11; 11') des Verstellantriebes (9 bis 12, 11', 12') in eine Gewindebohrung (16; 16') eines zylindrischen Teiles (14, 14') der Spindelmutter (12; 12') geschraubt ist.

10. Reibungsdämpfer nach einem der Ansprüche 1 bis 9,
dadurch gekennzeichnet,
daß ein Auslöser (48; 48') für die mechanische Verstellung der Spindelmutter (12; 12') vorgesehen ist.

11. Reibungsdämpfer nach Anspruch 10,
dadurch gekennzeichnet,
daß der Auslöser (48) stempelartig ausgebildet ist.

12. Reibungsdämpfer nach Anspruch 10 oder 11,
dadurch gekennzeichnet,
daß der Auslöser (48; 48') ein Ansatz eines Auges (5; 5'), vorzugsweise eine Ringscheibe
(43; 43') des Auges, zur Befestigung des Reibungsdämpfers (1; 1') an dem zu dämpfenden Teil ist.

13. Reibungsdämpfer nach Anspruch 12,
dadurch gekennzeichnet,
daß der Ansatz (48') mit mindestens einem, vorzugsweise zwei Zugteilen (48a') in den Bremskörper (3') ragt.

14. Reibungsdämpfer nach Anspruch 13,
dadurch gekennzeichnet,
daß das Zugteil (48a') stegartig mit einem Längsschlitz (60) ausgebildet ist, in den ein Nocken (61) der Spindelmutter (12'), vorzugsweise ihres Kegelabschnittes (13b), ragt.

15. Reibungsdämpfer nach eine der Ansprüche 1 bis 14,
dadurch gekennzeichnet,
daß der Abstand des Auslösers (48; 48') von der Spindelmutter (12; 12') zum mechanischen Auslösen des Dämpfers (1; 1') kleiner ist als die maximal zulässige Hubhöhe des Auslösers (48; 48') bei ungedämpfter Schwingungsbewegung.

16. Reibungsdämpfer nach einem der Ansprüche 1 bis 15,
dadurch gekennzeichnet,
daß die Spindelmutter (12; 12') mit Radialnocken (17, 18) verdrehgesichert in Führungsnuten (19, 20) der Reibungsbacken (6, 7; 6', 7') längsverschiebbar geführt ist.

17. Reibungsdämpfer nach einem der Ansprüche 1 bis 16,
dadurch gekennzeichnet,
daß die Spindelmutter (12; 12') mindestens im Bereich ihres Innengewindes (16; 16'), mit dem sie auf der Spindel (11; 11') sitzt, geschlitzt ausgebildet ist.

18. Reibungsdämpfer nach einem der Ansprüche 1 bis 17,
dadurch gekennzeichnet,
daß beim Aufprall des Auslösers (48; 48') die Spindelmutter (12; 12') unter elastischem Aufweiten ihres aufweitbaren Teiles (14; 14') über das Gewinde der Spindel (11; 11') ratscht.

## Claims

1. Friction damper for machines, more especially washing machines, including at least one braking body which abuts against a housing under resilient force, at least in the damping position, the frictional force, by means of which the braking body (3; 3') abuts against the housing (2; 2'), being adjustable in respect of its magnitude by an electrical adjustment drive (9, 10, 11, 12; 11', 12') incorporated therein, characterised in that, in the event of a power failure and/or a failure of the drive, the braking body (3; 3') can be brought into the damping position in a mechanical manner by the effect of the oscillation energy to be damped.

2. Friction damper according to claim 1, characterised in that the frictional force can be connected and disconnected during the operation of the machine by a fixed, timed actuation of a motor (9) of the adjustment drive (9 to 12; 11', 12').

3. Friction damper according to one of claims 1 or 2, characterised in that the adjustment drive (9 to 12; 11', 12') includes the motor (9), a reduction gear (10) which is connected to said motor, an adjusting spindle (11; 11') and a spindle nut (12; 12').

4. Friction damper according to claim 3, characterised in that the spindle nut (12) includes at least one adjustment part, which is configured as conical portion (13a; 13b), for displacing the braking body (9) into the damping position.

5. Friction damper according to one of claims 1 to 4, characterised in that the braking body (3; 3') can be brought into the damping position as a result of the spindle nut (12; 12') being compressed and/or tensioned.

6. Friction damper according to one of claims 1 to 5, characterised in that the braking body (3; 3') has at least two radially expansible brake shoes (6, 7; 6', 7'), which are provided with friction linings (31, 32) at the peripheral edge, by means of which linings said shoes abut against the housing (2; 2') in the damping position.

7. Friction damper according to one of claims 3 to 6, characterised in that, in the damping position, at least one of the conical portions (13a; 13b) of the spindle nut (12; 12') abuts against at least one, preferably two, diametrically opposed springs (38, 39; 38', 39') associated with the brake shoes (6, 7; 6', 7').

8. Friction damper according to one of claims 1 to 7, characterised in that the springs (38, 39; 38', 39') are configured as springs which are bent in the form of a "V" shape and the bending points of which (40, 41; 40', 41') lie on a level with a constriction (42; 42') of the spindle nut (12; 12') when the damper (1; 1') is in its undamped position.

9. Friction damper according to one of claims 3 to 8, characterised in that the spindle (11; 11') of the adjustment drive (9 to 12, 11', 12') is screwed into a threaded bore (16; 16') in a cylindrical part (14, 14') of the spindle nut (12; 12').

10. Friction damper according to one of claims 1 to 9, characterised in that a release means (48; 48') is provided for the mechanical adjustment of the spindle nut (12; 12').

11. Friction damper according to claim 10, characterised in that the release means (48) has a punch-like configuration.

12. Friction damper according to claim 10 or 11, characterised in that the release means (48; 48') is an extension member of a lug (5; 5'), preferably an annular disc (43; 43') of the lug, for the mounting of the friction damper (1; 1') on the part to be damped.

13. Friction damper according to claim 12, characterised in that the extension member (48') protrudes into the braking body (3') with at least one, preferably two tensioning parts (48a').

14. Friction damper according to claim 13, characterised in that the tensioning part (48a') is provided in a web-like manner with an elongate slot (60), into which a cam (61) of the spindle nut (12'), preferably of its conical portion (13b), protrudes.

15. Friction damper according to one of claims 1 to 14, characterised in that the spacing between the release means (48; 48') and the spindle nut (12; 12') for the mechanical release of the damper (1; 1') is smaller than the maximum permissible lifting height of the release means (48; 48') during an undamped oscillation movement.

16. Friction damper according to one of claims 1 to 15, characterised in that the spindle nut (12; 12') is guided in a longitudinally displaceable manner in guide grooves (19, 20) in the friction shoes (6, 7; 6', 7') so as to be prevented from twisting by radial cams (17, 18).

17. Friction damper according to one of claims 1 to 16, characterised in that the spindle nut (12; 12') has a slotted configuration, at least in the region of its internal thread (16; 16'), by means of which said nut sits on the spindle (11; 11').

18. Friction damper according to one of claims 1 to 17, characterised in that, during the impact of the release means (48; 48'), the spindle nut (12; 12') engages over the thread of the spindle (11; 11') so as to cause its expansible part (14; 14') to widen resiliently.

## Revendications

1. Amortisseur à friction pour machines, en particulier pour lave-linge, comprenant au moins un corps de frein appliqué sous l'effet d'une force élastique, au moins en position d'amortissement, contre une enveloppe, la grandeur de la force de frottement sous laquelle le corps de frein (3; 3') est appliqué contre l'enveloppe (2; 2'), étant réglable par une commande de réglage électrique (9, 10, 11, 12; 11', 12') intégrée, caractérisé en ce que, lors d'une panne de courant et/ou d'une défaillance de la commande, le corps de frein (3; 3') est susceptible d'être amené mécaniquement en position d'amortissement à l'aide de l'énergie vibrationelle à amortir.

2. Amortisseur à friction selon la revendication 1, caractérisé en ce que la force de frottement peut être activée et désactivée, pendant le fonctionnement de la machine, par une commande temporelle fixe d'un moteur (9) de la commande de réglage (9 à 12; 11', 12').

3. Amortisseur à friction selon la revendication 1 ou 2, caractérisé en ce que la commande de réglage (9 à 12; 11', 12') comporte le moteur (9), un engrenage démultiplicateur (10) relié à ce moteur, une broche de réglage (11; 11')) ainsi qu'un écrou de broche (12; 12').

4. Amortisseur à friction selon la revendication 3, caractérisé en ce que l'écrou de broche (12) comporte au moins une partie de réglage réalisée comme une partie conique (13a; 13b) pour le déplacement du corps de frein (3; 3') à la position d'amortissement.

5. Amortisseur à friction selon une des revendications 1 à 4, caractérisé en ce que le corps de frein (3; 3') peut être amené en position d'amortissement par une sollicitation à la compression et/ou à la traction de l'écrou de broche (12; 12').

6. Amortisseur à friction selon une des revendications 1 à 5, caractérisé en ce que le corps de frein (3; 3') possède au moins deux mâchoires de frein (6, 7; 6', 7') pouvant être écartées radialement et qui portent des garnitures de friction périphériques (31, 32) par lesquelles les mâchoires s'appliquent en position d'amortissement contre l'enveloppe (2; 2').

7. Amortisseur à friction selon une des revendications 3 à 6, caractérisé en ce que, en position d'amortissement, l'écrou de broche (12; 12') s'applique par au moins une partie conique (13a; 13b) contre au moins un ressort, de préférence contre deux ressorts (38, 39; 38', 39') diamétralement opposés et coordonnés aux mâchoires de frein (6, 7; 6', 7').

8. Amortisseur à friction selon une des revendications 1 à 7, caractérisé en ce que les ressorts (38, 39; 38', 39') sont réalisés comme des ressorts pliés en V dont les points de pliage (40, 41; 40', 41') s'appliquent, à la position de non-amortissement de l'amortisseur (1; 1'), contre l'écrou de broche (12; 12') à la hauteur d'un rétrécissement (42; 42') de cet écrou.

9. Amortisseur à friction selon une des revendications 3 à 8, caractérisé en ce que la broche (11; 11') de la commande de réglage (9 à 12, 11', 12') est vissée dans un trou fileté (16; 16') d'une partie cylindrique (14, 14') de l'écrou de broche (12; 12').

10. Amortisseur à friction selon une des revendications 1 à 9, caractérisé en ce qu'un déclencheur (48; 48') est prévu pour le déplacement mécanique de l'écrou de broche (12; 12').

11. Amortisseur à friction selon la revendication 10, caractérisé en ce que le déclencheur (48) est réalisé à la façon d'un poinçon.

12. Amortisseur à friction selon la revendication 10 ou 11, caractérisé en ce que le déclencheur (48; 48') est un appendice d'un anneau (5; 5'), de préférence d'un disque annulaire (43; 43') faisant partie de cet anneau, qui sertàla fixation de l'amortisseur à friction (1; 1') à la pièce à amortir.

13. Amortisseur à friction selon la revendication 12, caractérisé en ce que l'appendice (48') fait saillie par au moins une partie et de préférence par deux parties de tirage (48a') dans le corps de frein (3).

14. Amortisseur à friction selon la revendication 13, caractérisé en ce que la partie de tirage (48a') est réalisée à la façon d'une lame pourvue d'une fente longitudinale (60) dans laquelle est engagé un téton (61) de l'écrou de broche (12'), de préférence de sa partie conique (13b).

15. Amortisseur à friction selon une des revendications 1 à 14, caractérisé en ce que, pour le déclenchement mécanique de l'amortisseur (1; 1'), la distance séparant le déclencheur (48; 48') de l'écrou de broche (12; 12') est plus petite que la course maximale admissible du déclencheur (48; 48') lors d'un mouvement vibrationnel non amorti.

16. Amortisseur à friction selon une des revendications 1 à 15, caractérisé en ce que l'écrou de broche (12; 12') est guidé pour pouvoir coulisser longitudinalement, sans pouvoir tourner, par des saillies radiales (17, 18) engagées dans des rainures de guidage (19, 20) des mâchoires de frein (6, 7; 6', 7').

17. Amortisseur à friction selon une des revendications 1 à 16, caractérisé en ce que l'écrou de broche (12; 12') est fendu au moins dans la partie de son filetage intérieur (16; 16') par laquelle l'écrou est disposé sur la broche (11; 11').

18. Amortisseur à friction selon une des revendications 1 à 17, caractérisé en ce que; lors de l'impact du déclencheur (48; 48') contre lui, l'écrou de broche (12; 12') passe, pendant que sa partie (14; 14') élargissable s'élargit élastiquement, par-dessus le filetage de la broche (11; 11') dont les filets agissent à la façon de crans.
